# EUROPEAN PATENT APPLICATION

(11) **EP 3 757 723 A1**
(43) Date of publication of application: **30.12.2020**
(21) Application number: 19183251.8
(22) Date of filing: 28.06.2019
(51) Int. Cl.: G06F 3/01, G06K 9/00, G06T 19/00, G06T 11/20

(54) **METHOD FOR PROVIDING TANK-SPECIFIC INFORMATION TO AN ON-SITE OPERATOR**

(71) Applicant: Rosemount Tank Radar AB, 435 23 Mölnlycke (SE)
(72) Inventor: Wennerberg, Tomas, 428 30 KÅLLERED (SE); Preisig, Nicolas, 444 95 ÖDSMÅL (SE)
(74) Representative: AWA Sweden AB

(57) **Abstract**

A method for graphically presenting information relating to at least one tank in a vicinity of a user, the method comprising acquiring coordinates of a current location, retrieving, information about tanks in the vicinity of the current location, retrieving real-time process data associated with the tanks, and overlaying graphical elements indicating process data associated with the tanks present in the predicted field of view on an actual field of view perceived by the user on said display, using a predicted field of view to align the graphical elements with associated tanks in the actual field of view.

## Description

### Field of the invention

The present invention relates to a method for providing tank-specific information (i.e. filling level) of tanks in the vicinity of a user on a portable device (e.g. a mobile phone, AR-goggles, etc.) held by the user.

### Background of the invention

On a process industry site including several large tanks in a relatively large area, operation and monitoring of processes in the site (e.g. filling and emptying tanks) typically involves a collaboration between control room operators and outside operators. The control room operators have access to measurement data from field devices mounted on the tanks through a suitable communication link (e.g. a two wire interface or a wireless link), and may communicate with the field devices using a suitable communication (such as HART, Wireless HART, Foundation Fieldbus, etc). However, for some operations, on-site manipulation might be required, and the control room operator may then contact an outside operator and request physical intervention, e.g. manually opening or closing valves, or starting/stopping a pump.

The outside operators need to be in contact with the control room operators, e.g. by radio, in order to coordinate activities such as pump and valve operations. In order to facilitate the work of such an outside operator, it may be useful to provide the operator with a portable device equipped with a suitable interface for providing tank-specific information. For example, it may be useful for the operator to know the current filling level of various tanks. Such information may be acquired from a central control system using an appropriate wireless link, e.g. a local area network, an internet connection, or through a wireless connection with the field device which is connected to the control room.

To present this information in an efficient manner, it is known to present the information based on the position of the operator. For example, documents US 8,358,903, US 9,807,726 and US 2015/0302650 disclose location based on-site monitoring systems, presenting information relating to industry equipment in the vicinity of the user on a hand-held device. The documents also discuss overlaying graphics on actual image data acquired by the portable device (referred to as augmented reality). Various ways to locate the user are discussed, including GPS, scanning of QR-codes, etc.

Systems relying on QR-markers or the like require that the user is relatively close to the equipment, typically following a predetermined path throughout the site. However, in some situations, the user cannot be expected to follow specific path or be close to the equipment. One such example is an operator working in a so called "tank farm", i.e. a plurality of relatively large tanks spread out across a relatively large geographical area (e.g. a refinery). This user will sometimes be far away from the tanks he is looking at (e.g. 100 meters or more), while other times being immediately next to a 20 m wide and 20 meters high tank structure.

It would be desirable to have an information display system capable of handling these challenges.

### General disclosure of the invention

It is therefore an object of the present invention to provide an improved graphical interface for an outside operator of a site including a plurality of tanks storing products. For example, to provide tank-related information in an intuitive and correct manner and linking it to the phyiscal object (e.g. tank) without confusing the user.

According a first aspect of the present invention, this and other objects are achieved by a method for graphically presenting information on a portable device, the information relating to at least one tank in a vicinity of a user, the portable device including a localization unit, a wireless communication unit and a camera and a display, the method comprising acquiring coordinates of a current location from the localization unit, retrieving, information about tanks in the vicinity of the current location, the information including, for each tank, position coordinates and external geometry data, retrieving, over a wireless connection established by the wireless communication unit, real-time process data associated with the tanks, acquiring live image data using the camera, the image data defined by a direction of view and an angle of view, determining a predicted field of view of the live image data based on the direction of view, the angle of view, the position coordinates and the external geometry data, the predicted field of view indicating which tanks that are present in data acquired by the camera, and overlaying graphical elements indicating process data associated with the tanks present in the predicted field of view on an actual field of view perceived by the user on the display, using the predicted field of view to align the graphical elements with associated tanks in the actual field of view.

The present invention eliminates the need to scan or otherwise register a code or token associated with a specific tank. Instead, the method according to the invention allows indication of process data for all tanks that are visible in the current field of view of the user. A "predicted field of view" acquired with the camera, is used to align the overlaid graphical elements in a precise fashion over an actual field of view as perceived by the user.

The present invention is based on the realization that the visibility of objects (such as tanks) in a current field of view can be accurately predicted using easily accessible information about the camera's field of view (direction and angle of view) and known geographical locations and external geometric data for the objects. This information does not rely on image quality, and the method according to the invention will work satisfactory also in poor optical conditions, e.g. darkness of heavy fog.

Of course, it is very possible that additional image processing, e.g. of the type used in more conventional augmented reality applications, are also employed in the context of the present invention.

The camera's field of view may also take into account any user selected digital zoom, if such is provided by the device.

The display may be display screen, such as the display of a mobile phone or tablet. Alternatively, the portable device is worn by the user and the display is formed in front of at least one of the user's eyes. It may be a transparent surface, and a projector for projecting an image on this surface. It may also be a see-through light emitting display. Such a portable device may be referred to as AR goggles or AR glasses.

In one embodiment, the live image data is displayed on the display, and forms the actual field of view perceived by the user on the display. The graphical elements are then overlaid on the live image data. This embodiment allows making a prediction of the actual field of view very accurate.

Note that the actual field of view perceived by the user on the display may be displayed on a handheld display (e.g. a phone or tablet) or may be displayed in one corner of the user's view of the real world using a head-worn device. In either case, the user is in a position to compare the digital image of the site having graphics overlaid, with the real world without graphics.

In a different embodiment, a transparent display in front of the user's eye(s) covers the user's entire field of view. The field of view perceived by the user on the display thus becomes the real world as seen by the user. This embodiment presents some challenges with respect to aligning the graphical elements with the actual field of view. Although the predicted field of view can be made highly accurate, the precise alignment of graphical elements will most likely also require information about the position of the eyes (pupils) with respect to the transparent display. Such eye tracking equipment is known in the art, and may be combined with a head-worn portable device according to this particular embodiment of the present invention. Preferably, the camera's zoom can be adjusted such that the predicted field of view matches the user's view of the real world. Or, put differently, such that the angle of view of the camera is close to the angle of view of the user's eyes.

The alignment of graphical elements may include various details, in order to improve the conveying of the technical information included in the graphical elements.

For example, the method may include identifying complete tanks which are completely within the predicted field of view, and, for such complete tanks, adapting a graphical element associated with a particular tank to fit a size of this particular tank. With this approach, the graphical elements may be more intuitively understood. For example, a bar graph indicating a filling level may be adjusted to fit the height of the tank, such that the bar represents the actual content in the tank.

The method may further involve identifying partial tanks, which are so close to the camera that only part of the tank is within the predicted field of view, and, for such partial tanks, displaying a graphical element having a size uncorrelated with the size of the tank. Instead, the size of the graphical element may be selected to be fully visible and legible in the display without taking too much space. One or several default sizes may be defined, or the size may be dynamically chosen. This allows effective display also of graphical elements associated with tanks which are very close to the user.

With this approach, the graphical interface becomes more flexible, and can handle a situation where the operator moves from a distant position, where all tanks may fit in the field of view (i.e. the display), to a close-up distance, where one or several tanks may not fit in the field of view (display).

Preferably, the method further includes identifying, among the tanks present in the field of view, occluded tanks which are located behind other tanks and therefore occluded to such an extent as to prevent overlay of the graphical elements, and for any such occluded tank, graphically indicating an outline of the occluded tank, and displaying the graphical element in this outline.

Such an approach increases the efficiency of the graphical interface by providing information also for tanks not actually visible from a user's current location.

It is noted that an occluded tank may also be a partial tank, i.e. the outline may represent only a limited part of the occluded tank. In this case the graphical element may not be adapted to the outline size, but instead have a default size.

Also, it is noted that the display of a tank outline (and a graphical element therein) may require adjusting size and/or position of another graphical element.

The steps of determining a predicted field of view and overlaying the graphical elements are preferably regularly repeated to keep the presented information up to date and aligned with the actual field of view. In particular, these steps may be repeated whenever the current location and/or the direction of view are changed.

As an exception, the steps of determining a predicted field of view and overlaying the graphical elements are not necessarily repeated when the current location and/or the direction of view are changed with a rate of change (measured e.g. as velocity or acceleration) exceeding a given threshold. For example, if the user quickly turns his head, it may be computationally difficult to update the graphics overlay rapidly enough. Therefore, the image update may be paused, until the user movement has stopped, or at least slowed down. More specifically, the inventors have realized that using such a threshold for selectively disabling the overlay of graphical elements is in line with the overall object of the present invention to create an intuitive and user-friendly solution.

The threshold may also function as an indirect user-input from a *Human Machine Interaction* perspective. When the user moves the portable device at a rate of change above the threshold, he will see the field of view in real-time without graphical information. When the user is content with the selected field of view (e.g. the tanks that the user wants to monitor are within the field of view) the portable device is held still (or at least with a rat of change below the threshold) as way to request that the graphical elements should be displayed. This eliminates the need for any other, more direct, user interaction (like pressing a button or touching a screen, etc).

### Brief description of the drawings

The present invention will be described in more detail with reference to the appended drawings, showing currently preferred embodiments of the invention.
Figure 1 shows schematically a tank equipped with a field device, a control room and a portable device.
Figure 2a and 2b are flowcharts illustrating methods according to embodiments of the invention.
Figure 3a and 3b are examples of images displayed on the display of the portable device.
Figure 4a is a bird-view of a portable device in relation to a set of tanks.
Figure 4b is an example of an image of the tanks in figure 4a displayed on the display of the portable device.
Figure 5a is a bird-view of a portable device in relation to a set of tanks.
Figure 5b is an example of an image of the tanks in figure 5a displayed on the display of the portable device.
Figure 6a shows a portable device in the form of a pair of an AR headset according to a further embodiment of the invention.
Figure 6b is an example of a display on an AR headset.
Figure 6c is a second example of a display on an AR headset.

### Detailed description of preferred embodiments

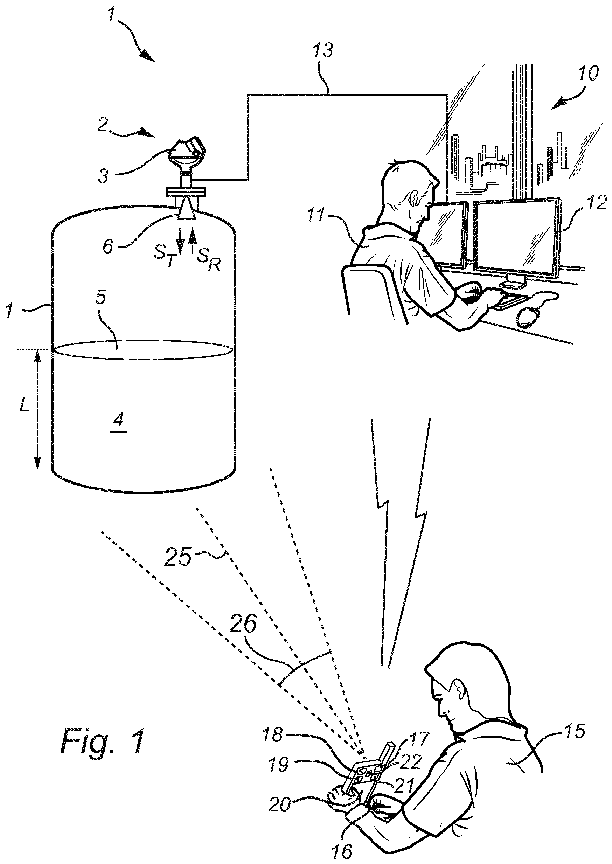

Figure 1 shows schematically a tank 1 equipped with a field device 2, here a radar level gauge (RLG) 3. The RLG 3 is mounted on the roof of the tank 1, and arranged to determine a filling level L of a product 4 in the tank 1. More specifically, the RLG 3 emits an electromagnetic transmit signal S_{T}, and receives an electromagnetic return signal S_{R}. caused by a reflection in the surface 5 of the product 4. In the illustrated case, the RLG 2 is a non-contact RLG, where the signals are emitted and received by a free-propagating directional antenna 6.

The tank 1 is located on a site together with a plurality of other tanks. A typical example of such a site is a refinery where different tanks store various petroleum products. Such a collection of tanks on a site is sometimes referred to as a "tank farm". Each tank is provided with one or several field devices 2, to measure various process variables. The measurement results are communicated from the field devices 2 to a control room 10, where one or several control room operators 11 monitor the status of the tanks 1 in the site using a central control system 12 running suitable software, such as Rosemount TankMaster®. The communication may be provided by a two wire control loop 13, or by suitable wireless connection, typically in combination with one or several data-concentrators.

An outside operator 15 is also involved in ensuring satisfactory operation of the site. For example, some operations, such as opening/closing valves, or starting/stopping a pump, may require physical intervention by an operator. Such an outside operator here carries a portable device 16, including a wireless unit 17, providing a connection to the control system 12. The wireless connection may be a Wi-Fi connecting the device 16 to a local area network (LAN) or a wide area network (WAN) such as the Internet. Alternatively, the wireless unit 17 is configured to provide a wireless connection with the field device 2, e.g. a Bluetooth connection. In this case, typically all required information may be provided directly by the field device 2 to the portable device 16. In the (unusual) event that the portable device 16 requests additional information from the control system 12, communication between the portable device and the control system 12 may be provided by the field device 2.

In order for the outside operator 15 to be able to work efficiently, it is advantageous to be continuously and efficiently informed about the status of the various tanks. For example, to be informed about the filling level in each tank. Level, flow rate, volume, alarms, set-points, alarm limits. Floating roof state (tilted,

For this purpose, the device 16 is provided with a camera 18, a localization unit such as a GPS 19, and a display 20. The device 16 is further provided with a processor 21 configured to execute software stored in a memory 22. In the illustrated case, the portable device is a mobile phone 16, but may be any other type of suitable portable device, such as a tablet, a laptop, headset, etc,

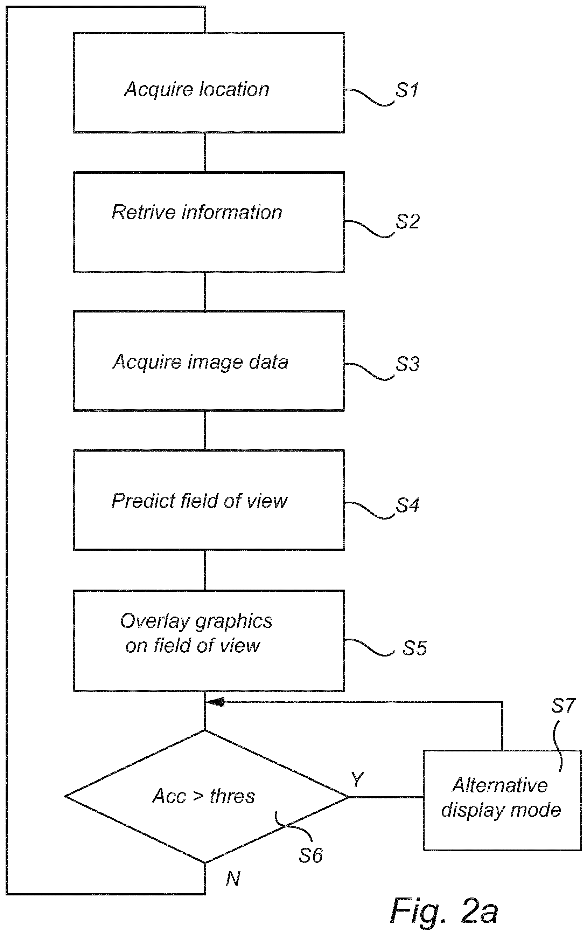

According to an embodiment of the present invention, the software is designed to execute the procedure outlined in figure 2a-b.

First, in step S1, the portable device 16 acquires coordinates of a current location from the localization unit 19. As mentioned, the localization unit may be a GPS, and the coordinates are then conventional GPS coordinates.

Then, in step S2, the portable device 16 retrieves information about tanks in the vicinity of the current location, the information including, for each tank position coordinates, external geometry data, and real-time process data. The position coordinates may be GPS coordinates, or any other type of geographic coordinates compatible with the processing in the portable device 16. The position coordinates are preferable in three dimensions, i.e. including also a Z-direction, elevation. The geometric data of a tank typically includes at least height and diameter (of a cylindrical tank), but may also include more complex data. The relevant process data may include one or several process variables relevant for the outside operator. Such process variables may include a filling level of the tank.

Some of this data, e.g. position coordinates and geometry data, may have been previously stored in memory 22. This may be efficient, as the operator typically works in a single tank farm where the number of tanks, their location and geometry, stays the same over a significant length of time. Alternatively, e.g. for an operator working in several different sites, the tank data is downloaded over the wireless connection from a central database, e.g. on the control system server.

The real-time process data, i.e. data related to measured process variables, such as filling level, will be retrieved from the central control system using the wireless connection. As an exception, real-time data for a particular tank may also be retrieved directly from a field device 2 using e.g. a Bluetooth connection, when the field device 2 is in range for such a direct wireless connection.

In step S3, the portable device 16 acquires (captures) live image data (video) using the camera 18, the image data corresponding to a field of view determined by a direction of view 25 and an angle of view 26.

The direction of view defines a direction (in three dimensions) from the current location. Typically, this direction is the optical axis of the camera 18. The angle of view defines a sector in space in which the camera 18 will capture an image, i.e. basically a zoom of the camera. Basically, the direction of view defines in what direction the camera 18 is directed, and the angle of view defines how much of the scene it will capture. Typically, the angle of view is symmetrical, so that it is forms a circular cone aligned with the direction of view and with its pointed end in the camera 18. However, more complex angles of view are possible, including e.g. a zoom which is compressed in the horizontal and/or vertical plane.

The angle of view will be determined primarily by the optics of the camera 18, which typically may be acquired from the device operating system. For some mobile phones, for example, the vertical zoom angle and horizontal zoom angle are both accessible by simple camera parameter calls. In addition, the angle of view will be determined by any user applied zoom. This information may also be retrieved from the device operating system. Possibly, the device also applies a different aspect ratio for its display than for its camera image sensor. In that case, the change in aspect ratio also needs to be taken into account in order to obtain the actual angle of view of the image on the display 20.

Then, in step S4, the portable device 16 determines a predicted field of view based on the current location (e.g. GPS coordinates), the direction of view, the angle of view, the position coordinates of the tanks, and the external geometry data for the tanks. The predicted field of view is a prediction of which tanks that are present in the image data captured by the camera 18.

Finally, in step S6, the portable device 16 displays graphical elements 31 indicating the relevant process data associated with the tanks present in the predicted field of view on the video image data. The graphical element 31 may also include a name or label of the associated tank. Such a name or label may be part of the retrieved information.

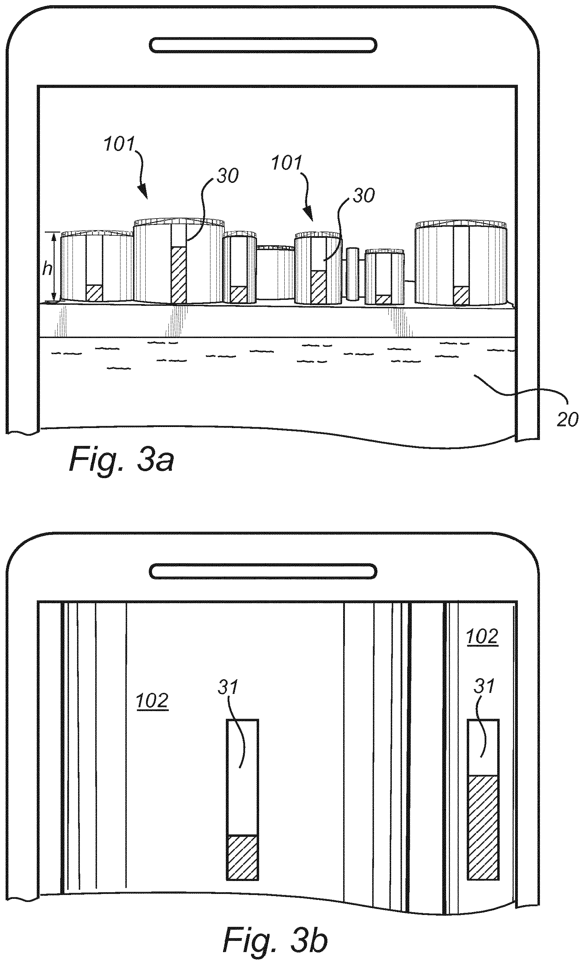

The graphical elements are overlaid on an actual field of view perceived by the user. In the examples illustrated in figures 3-5, the actual field of view is formed by the acquired image data, displayed on the display 20. The graphical elements are aligned with the tanks in the actual field of view, in order to improve the conveying of the technical tank-specific information.

After overlaying the graphics, the processing continues with step S6, checking if the acceleration of the portable device exceeds a predefined threshold, making continuous tracking of the graphical overlay difficult. If this is the case, an alternative display mode may be applied in step S7, e.g. without overlaying the graphical elements. When the acceleration falls below the threshold, processing returns to step S1 to repeat the graphical overlaying process, thereby providing the user with a real time display of information aligned with the user's actual field of view.

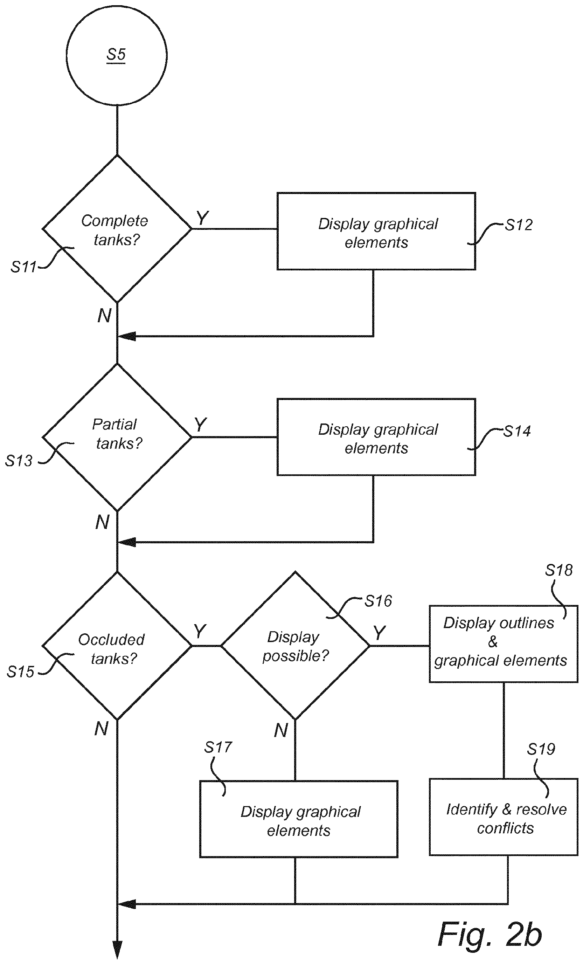

A more detailed embodiment of the processing in step S5 is shown in figure 2b.

In the first step, S11, any complete tanks 101 are identified, i.e. tanks which are fully visible in the predicted field of view. Figure 3a shows video image data including a plurality of complete tanks 101 displayed on the display 20. Further, in step S12, a graphical element 30 is displayed on each tank 101. The graphical element 30 here has the form of a vertical bar graph. In this case, each bar graph 30 is scaled to fit the height h of each respective complete tank 101 on the display. It is noted that the height h of each tank on the display is determined in step S4, as part of the predicted field of view, based the actual height of the tank (part of the geometric data), the distance between the portable device 16 and the tank 1, and finally the angle of view of the camera 18 (i.e. determining the zoom of the camera). It is noted that any digital zoom applied by the device (or user) should also be taken into account.

The program control then continues to step S13, to identify, among the tanks present in the predicted field of view, any tank 1 which is so close to the camera that only part of the tank (referred to as a partial tank 102) is present in the video image data. Figure 3b shown an example of a view when the portable device 16 is so close to two tanks 1 that the tanks do not completely fit into the display 20. Therefore, only partial tanks 102 are shown.

In step S14, a graphical element 31 is displayed on each partial tank 102. Just like the element 30, the graphical element 31 has the form of a vertical bar graph. In this case, however, the bar graph is not scaled to the height of the tank 1, as it would then not fit in the display. The size of the element 31 may be a preset default, or may be dynamically determined by other factors, such as available space.

The program control then continues to step S15, to identify, among the tanks present in the predicted field of view, any tank which is located behind another tank. In step S16, any such tanks are further divided into tanks which are still sufficiently visible to allow display of graphical elements, and those which are not. In the following, the former category of tanks are referred to as partly occluded tanks 103, while the latter category of tanks are referred to as occluded tanks 104.

For the partly occluded tanks 103, graphical elements are displayed in step S17, according to similar principles as discussed above with reference to steps S12 and S14.

For each occluded tank 104, processing moves to step S18, where a graphical outline 32 of the occluded tank 104 is first defined and displayed, and a graphical element 30 or 31 is displayed in this outline 32. The graphical element may be displayed as outlined in step S12 or S14. However, as the outline 32 (and the graphical element therein) by definition is located on top of another tank 100, it may be necessary to slightly adjust the location and/or size of any graphical element displayed in association with this tank. Identification and resolution of such conflicts are performed in step S19.

It is noted that the various display-steps in the flow chart in figure 3b (steps S12, S14, etc,) may in practice be limited to defining the graphical elements, and in that case the flow chart will end with a final display step.

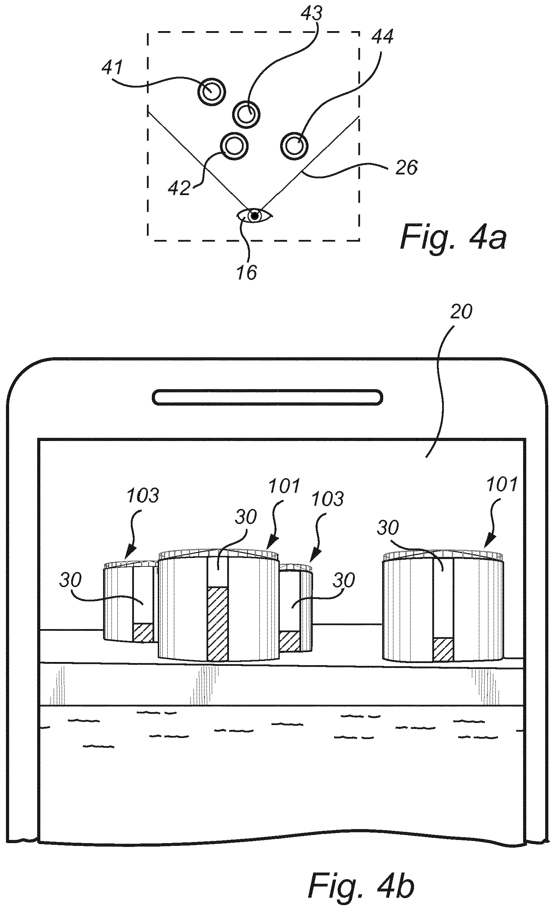

Figure 4a shows a bird-view of a portable device 16 directed at a group of tanks 41-44. It is clear from figure 4a that two tanks 41, 43 are located behind, and partly occluded, by another tank 42. Figure 4b shows an example of an overlaid image on the display 20 of the device 16 of the tanks in figure 4a. In this case, the partly occluded tanks 103 are still visible to a sufficient degree to allow overlay of the graphical element 30. It is noted that in the image in figure 4b there are no partial tanks, i.e. all tanks 41-44 are at such a distance that they fit completely in the image (also the partly occluded tank 1c).

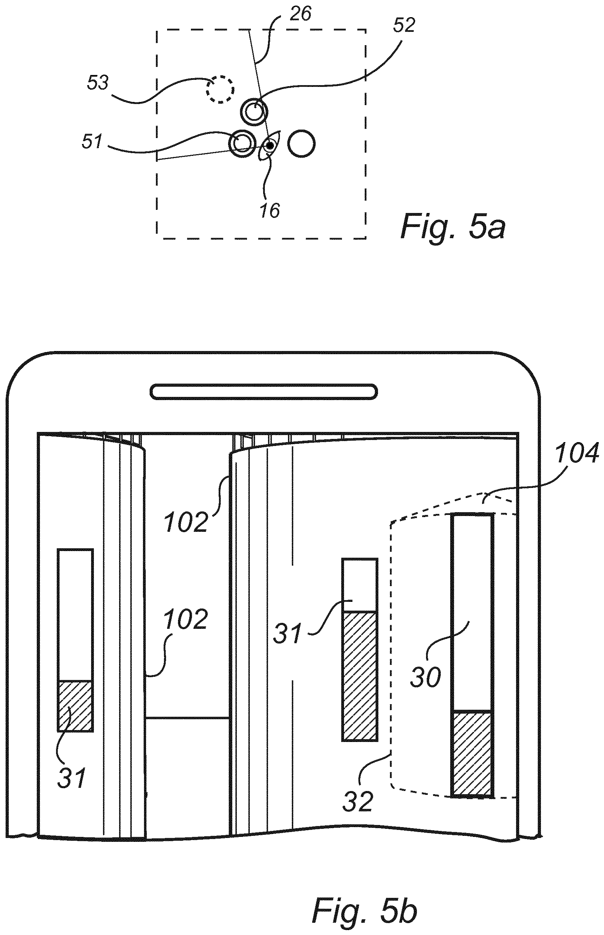

Figure 5a shown another example of a portable device 16 directed at a group of tanks 51-53. It is clear from figure 4a that one tank 53 is located behind, and completely occluded, by another tank 52. Figure 5b shows an example of an overlaid image on the display 20 of the device 16 of the tanks in figure 5a. In this case, the completely occluded tank 104 is not visible at all. Instead, the portable device 16 provides a graphical outline 32 of the occluded tank 104, and presents the graphical element 30 in this outline 32.

It is noted that in the image in figure 5b tanks 51 and 52 are presented as partial tanks 102, i.e. they are too close to be fully visible. The graphical elements 31 associated with these tanks therefore have a predefined size, not scaled to the tanks. The occluded tank 53, however, is in fact at a sufficient distance so as to fit completely in the image, if it were not behind tank 52. This is apparent from the outline 32, which represents an image 104 of the entire tank. The graphical element 30, associated with tank 53, is therefore scaled to the size of the outline 32 (tank 104).

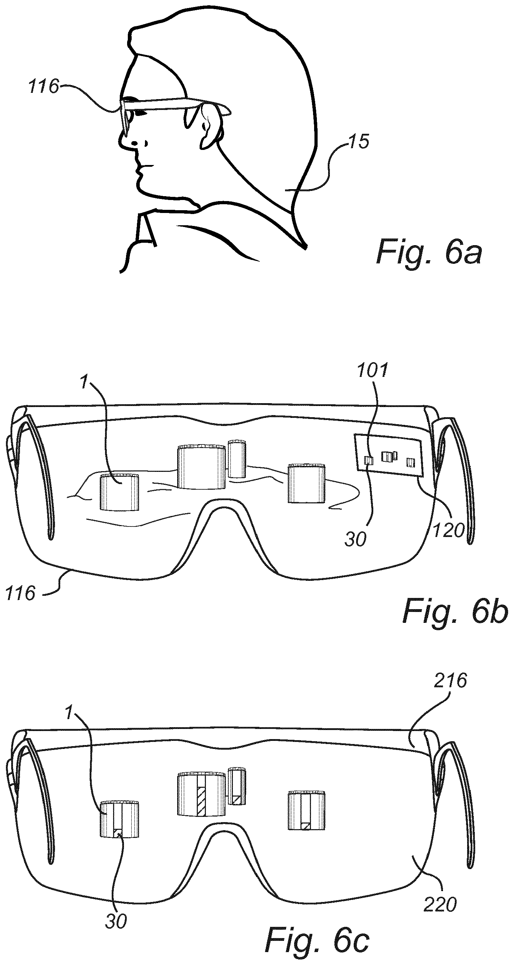

Figure 6a shows a portable device which is worn by the user 15, here a head-set 116 including a pair of glasses or goggles. Similar to the portable device in figure 1, the head-set 116 includes a wireless unit, a camera, a localization unit such as a GPS, and a processor configured to execute software stored in a memory.

The head-set further includes a transparent display 120, which is configured to be located in or close to the user's line of sight. The transparent display may be a projector display, including a projecting device arranged to project an image on a transparent surface, e.g. a glass surface of a pair of glasses. Alternatively, the transparent display is a see-through light emitting display, e.g. a see-through LCD.

In figure 6b, the transparent display 120 is restricted to an upper corner of the user's field of view through the glasses 116. The video data and overlaid graphics as previously described is displayed in this corner. The user will thus be able to see a real world view of the tanks 1, and simultaneously see a digital image of tanks 101 as captured by the camera, with graphical elements 30 overlaid on the digital image.

In figure 6c, the head set 216 is provided with a transparent display 220 which covers (substantially) the entire field of view of the user. In this case, the image data acquired by the camera is not displayed. Instead, the user's view of the real world is used as the actual field of view, and graphical elements 30 are displayed directly on this real world view, aligned with tanks 1 present therein.

The person skilled in the art realizes that the present invention by no means is limited to the preferred embodiments described above. On the contrary, many modifications and variations are possible within the scope of the appended claims. For example, other types of portable devices and displays are possible. The graphical elements, which here are shown as bar graphs, mat also take on any number of forms, and may relate to other process variables in addition to tank filling level.

## Claims

1. A method for graphically presenting information on a portable device, said information relating to at least one tank in a vicinity of a user, the portable device including a localization unit, a wireless communication unit and a camera and a display, the method comprising:
acquiring coordinates of a current location from the localization unit, retrieving, information about tanks in the vicinity of the current location, said information including, for each tank, position coordinates and external geometry data,
retrieving, over a wireless connection established by the wireless communication unit, real-time process data associated with the tanks,
acquiring live image data using the camera, said image data defined by a direction of view and an angle of view,
determining a predicted field of view of said live image data based on said direction of view, said angle of view, said position coordinates and said external geometry data, said predicted field of view indicating which tanks that are present in data acquired by the camera, and
overlaying graphical elements indicating process data associated with the tanks present in the predicted field of view on an actual field of view perceived by the user on said display, using said predicted field of view to align the graphical elements with associated tanks in the actual field of view.

2. The method according to claim 1, wherein said portable device is worn by the user, and wherein said display is a transparent display arranged in front of at least one of the user's eyes

3. The method according to claim 1 or 2, further comprising displaying the live image data on said display, said live image data forming said actual field of view, and
wherein said graphical elements are displayed on the display and aligned with tanks in the live image data.

4. The method according to claim 2,
wherein said transparent display covers substantially the user's entire view of the real world, said view of the real world forming said actual field of view,
wherein the graphical elements are displayed on the transparent display and aligned with tanks in the user's view of the real world.

5. The method according to claim 2, wherein the transparent display is one of:
a transparent surface and a projector for projecting an image on said surface, and
a see-through light emitting display.

6. The method according to claim 1 or 2, wherein determining which tanks that are present in said field of view is also based on a user selected digital zoom.

7. The method according to claim 4, wherein a digital zoom of the camera is selected such that the predicted field of view matches the user's view of the real world.

8. The method according to any one pf the preceding claims, further comprising:
identifying complete tanks which are completely within the predicted field of view, and
for such complete tanks, adapting a graphical element associated with a particular tank to fit a size of this particular tank.

9. The method according to any one pf the preceding claims, further comprising:
identifying partial tanks which are so close to the camera that only part of the tank is within the predicted field of view, and
for such partial tanks, displaying a graphical element having a default size.

10. The method according to any one of the preceding claims, further comprising:
identifying occluded tanks which are located behind other tanks in the predicted field of view and therefore occluded to such an extent as to prevent overlay of the graphical elements, and
for such occluded tanks, graphically indicating an outline of the occluded tank and displaying the graphical element in said outline.

11. The method according to any one of the preceding claims, wherein the steps of determining a predicted field of view and overlaying the graphical elements are repeated when the current location and/or the direction of view are changed.

12. The method according to claim 11, wherein the steps of determining a predicted field of view and overlaying the graphical elements are not repeated when the current location and/or the direction of view are changed with a rate of change exceeding a given threshold.
